# EUROPÄISCHE PATENTSCHRIFT

(11) **EP 3 216 744 B1**
(45) Veröffentlichungstag und Bekanntmachung des Hinweises auf die Patenterteilung: **11.04.2018**
(21) Anmeldenummer: 17159058.1
(22) Anmeldetag: 03.03.2017
(51) Int. Cl.: B66F 9/06, B66F 9/075, G05D 1/00

(54) **VERFAHREN ZUR STEUERUNG EINES FLURFÖRDERZEUGS BEIM KOMMISSIONIEREN**
METHOD FOR CONTROLLING AN INDUSTRIAL TRUCK WHEN PICKING
PROCÉDÉ DE COMMANDE D'UN CHARIOT DE MANUTENTION POUR LA PRÉPARATION DE COMMANDE

(30) Priorität: 07.03.2016 DE 102016104089
(43) Veröffentlichungstag der Anmeldung: 13.09.2017
(73) Patentinhaber: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Fischer, Christian, 24598 Boostedt (DE)
(74) Vertreter: Patentship Patentanwaltsgesellschaft mbH

(56) Entgegenhaltungen:
- EP-A1- 2 851 331
- FR-A1- 2 980 436

## Beschreibung

Die Erfindung betrifft ein Verfahren zur Steuerung eines Flurförderzeugs beim Kommissionieren. Insbesondere betrifft die Erfindung ein Verfahren zur Steuerung eines Flurförderzeugs beim Kommissionieren bei einem Flurförderzeug mit mindestens einem Umgebungssensor zur Erfassung der relativen Position eines Bedieners in der Umgebung des Flurförderzeugs.

Bei Flurförderzeugen, insbesondere Lagertechnikgeräten, die für das Kommissionieren eingesetzt werden sollen, sind reine Mitgängerfahrzeuge bekannt, bei denen der Bediener neben dem Fahrzeug herläuft, beispielsweise einem Gabelhubwagen. Daneben sind auch Fahrzeuge bekannt, die einen Fahrerplatz zum Mitfahren aufweisen. Beim eigentlichen Kommissionieren kann dieser Fahrerplatz leicht verlassen werden, um Waren aufzunehmen und beispielsweise auf einer Palette auf einer Lastgabel abzulegen.

Für solche Flurförderzeuge sind optische Umgebungssensoren bekannt, mit denen die Umgebung des Flurförderzeugs erfasst wird. Dies können beispielsweise zweidimensionale Laserscanner (2-D Laserscanner) oder auch dreidimensionale Laserscanner (3-D Laserscanner) ebenso wie Distanzen erfassende optische Sensoren sein, wie beispielsweise eine Time Of Flight Kamera. Mithilfe solcher Umgebungssensoren werden Hindernisse in der Umgebung, Fahrwege, Positionen von Paletten und insbesondere bei Kommissionierflurförderzeugen auch die Lage des Flurförderzeugs relativ zu einem Lastregal erfasst. Beispielsweise kann hierfür ein Laserscanner verwendet werden, der die Umgebung orthogonal zu einer Spiegelrotationsachse vermisst.

Aus der EP 2 851 331 A1 ist ein gattungsgemäßes Flurförderzeug mit einem Umgebungssensor bekannt, der als optischer Sensor ausgebildet ist, wobei die Position einer Bedienperson innerhalb eines Überwachungsbereichs des Umgebungssensors erfasst wird. Überschreitet die Bedienperson eine definierte Überwachungsgrenze innerhalb des Überwachungsbereichs, wird das Flurförderzeug automatisch nachgeführt, so dass das Flurförderzeug der Bedienperson automatisch folgt.

Die FR 2 980 436 A1 offenbart einen selbstfahrenden Golftrolley, der mit zwei Ultraschallsensoren einen vorauslaufenden Golfspieler erfasst und diesem mit einem bestimmten Abstand folgt.

Es ist weiterhin bekannt, dass zur Arbeitserleichterung beim Kommissionieren ein Lagertechnikgerät bzw. Flurförderzeug ferngesteuert bewegt werden kann, beispielsweise indem über eine Fernbedienung ein Knopf gedrückt wird und, solange dieses Signal erfolgt, das Flurförderzeug sich weiter bewegt. Dabei reagiert das Flurförderzeug mithilfe der zuvor beschriebenen optischen Umgebungssensoren automatisch auf sich verändernde Abstände zu dem Lastregal und weicht während der Fahrbewegung automatisch Hindernissen aus. Das Flurförderzeug hält die Spur im Gang eines Lastregals automatisch.

Nachteilig hieran ist, dass das Flurförderzeug gerade so positioniert wird, wie es durch den Bediener ferngesteuert wird. Die Vorwärtsfahrt des Flurförderzeugs wird in dem Moment unterbrochen, wenn der Bediener beispielsweise eine Vorwärtstaste einer Fernbedienung loslässt. Es bleibt somit allein dem Bediener überlassen, eine günstige Positionierung bzw. einen möglichst geringen Abstand zwischen der Position einer zu kommissionierenden Ware und dem Ablagepunkt auf dem Flurförderzeug zu erreichen. Durch das Erfordernis, dass rein die bedienende Person diese Regelung vornehmen muss, muss sich der Bediener im Fall einer Vorwärtsfahrt zur nächsten Kommissionierposition vollständig hierauf konzentrieren. Der Bediener hat somit die Fernbedienung in der Hand und die Hand nicht frei, um beispielsweise bereits die nächste Ware aufzunehmen. Wenn beispielsweise ein Gabelhubwagen mit einer langen Lastgabel für zwei Paletten positioniert werden soll, muss der Bediener individuell jeweils die Positionen anfahren für ein beladen einer vorderen Palette oder einer hinteren Palette.

Der vorliegenden Erfindung liegt daher die Aufgabe zugrunde, ein Verfahren zur Steuerung eines Flurförderzeugs beim Kommissionieren zur Verfügung zu stellen, das die zuvor genannten Nachteile vermeidet und mit dem eine leichtere Bedienung sowie ein höherer Warenumsatz zu erreichen ist.

Diese Aufgabe wird durch ein Verfahren zur Steuerung eines Flurförderzeugs beim Kommissionieren mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung eines Flurförderzeugs beim Kommissionieren bei einem Flurförderzeug mit mindestens einem Umgebungssensor zur Erfassung der relativen Position eines Bedieners in der Umgebung des Flurförderzeugs, von einer Steuerung das Flurförderzeug mit einer Veränderung der Position des Bedieners mitbewegt wird, wobei bei einem Anhalten des Bedieners das Flurförderzeug in einem frei wählbaren, zuvor in Fahrzeuglängsrichtung festgelegten Abstand zwischen einem Bezugspunkt einer Lastaufnahmevorrichtung des Flurförderzeugs und der Position des Bedieners gestoppt wird.

Die Steuerung führt dabei einen kontinuierlichen Regelalgorithmus durch und steuert den Fahrantrieb des Flurförderzeugs so, dass die Position des Bedieners und des Flurförderzeugs relativ zueinander kontinuierlich und/oder progressive angepasst werden. Vorteilhaft ergibt sich eine Erhöhung der Ergonomie, da der Bediener sich nicht mehr um die Regelung der Halteposition des Flurförderzeugs kümmern muss. Es erfolgt eine optimale Anpassung an den Kommissionierer Prozess. Dabei kann der Abstand zuvor von dem Fahrer frei und individuell eingegeben werden, abhängig von eigenen Wünschen. Der Abstand bezieht sich dabei auf einen Bezugspunkt der Lastaufnahmevorrichtung der beispielsweise die Mitte einer Palettenposition, aber auch die Fahrzeugvorderkante bzw. Vorderkante einer Lastgabel als Lastaufnahmevorrichtung bedeuten kann. Es ergeben sich für den Bediener beim Kommissionieren geringe oder wunschgemäße Weglängen zwischen den zu kommissionierenden Waren und der Absetzposition auf dem Flurförderzeug. Insbesondere kann der Bediener vorteilhaft beim Anfahren der nächsten Position einer aufzunehmenden Ware den für ihn günstigsten Haltepunkt wählen, dort ein beispielsweise mit einem Fahrstand ausgerüstetes Flurförderzeug verlassen und die Ware bereits greifen, während sich zugleich das Flurförderzeug eigenständig in die gewünschte, optimale relativ Position zu dem Bediener bewegt.

Die Steuerung kann das Flurförderzeug in einem frei wählbaren, zuvor in Fahrzeugquerrichtung festgelegten Abstand zwischen einem Bezugspunkt einer Lastaufnahmevorrichtung des Flurförderzeugs und der Position des Bedieners stoppen.

Dadurch kann auch der seitliche Abstand zu den Bediener optimiert werden, wobei der Bediener sich beispielsweise vor ein Regal stellt, eine Ware aufnimmt und beim Umdrehen und absetzen auf dem Flurförderzeug das Flurförderzeug in dem gewünschten, optimalen Seitenabstand vorfindet.

Der Abstand in Fahrzeuglängsrichtung und/oder der Abstand in Fahrzeugquerrichtung kann von dem Bediener durch einen Schieberegler eingestellt werden.

Eine solche Einstellung ist intuitiv und kann beispielsweise an dem Flurförderzeug vorgesehen werden. Ebenso ist es auch denkbar, einen solchen Schieberegler in eine Fernbedienung zu integrieren.

Es kann ein Zielkorridor eingegeben werden mit einer maximalen Abweichung von der Stoppposition, bei der, nachdem das Flurförderzeug den Zielkorridor erreicht hat, keine Nachregelung durchgeführt wird.

Es kann somit ein gewisser Toleranzbereich festgelegt werden, innerhalb dessen keine weitere nach Regelung erfolgt. Dadurch kann ein schnelleres Anhalten des Flurförderzeugs erreicht werden.

Vorteilhaft kann das Flurförderzeug zwei oder mehr Paletten auf einer Lastaufnahmevorrichtung in Längsrichtung hintereinander transportieren und können Abstände für die einzelnen Paletten ausgewählt werden, insbesondere durch einen Tastschalter ausgewählt werden.

Insbesondere bei Kommissionierfahrzeugen mit langen Lastgabeln, die zwei Paletten hintereinander transportieren, kann somit ein einfaches und schnelles Umschalten zwischen einer Absetzposition auf der ersten oder zweiten Palette erreicht werden.

In einer Weiterbildung des Verfahrens ist das Flurförderzeug ein Zugfahrzeug für einen Routenzug und können Abstände für die einzelnen Routenzuganhänger ausgewählt werden.

Das Flurförderzeug kann einen Fahrerstand aufweisen und das Verfahren eingeschaltet werden, sobald eine Steuerung das Verlassen des Fahrerstandes durch Fahrererkennungssensoren erfasst.

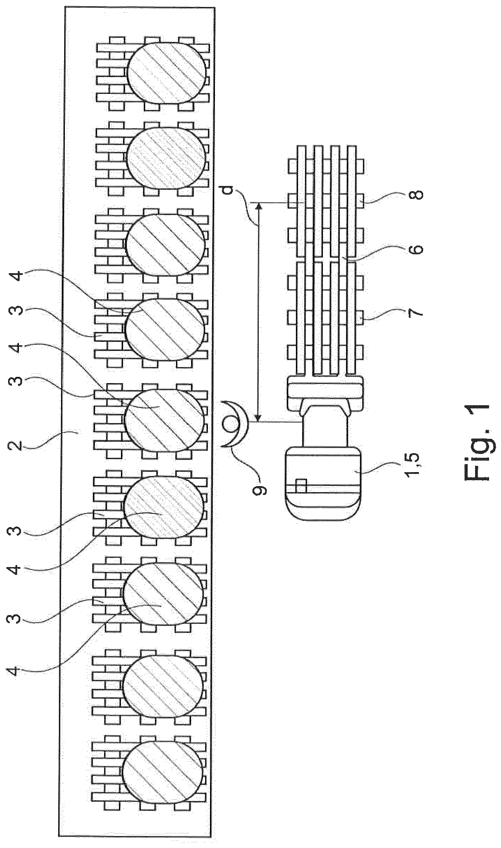

Weitere Vorteile und Einzelheiten der Erfindung werden anhand des in der schematischen Figur dargestellten Ausführungsbeispiels näher erläutert. Hierbei zeigt die Figur ein Flurförderzeug 1 neben einem Lastregal 2 mit einer Mehrzahl von Paletten 3 und jeweils auf diesen befindlichen Waren 4. Das Flurförderzeug ist ein Gabelhubwagen 5 mit langen Lastarmen 6, auf denen eine erste Palette 7 und eine zweite Palette 8 beim Kommissionieren transportiert werden können. Dargestellt ist die Situation beim Anhalten des Flurförderzeugs 1, bei dem entsprechend dem Verfahren eine Steuerung das Flurförderzeug in Bezug auf die Mitte der zweiten Palette 8 in einem Längsabstand d zu einem Bediener 9 anhält. Wenn der Bediener 9 eine Ware aufgenommen hat und sich dem Flurförderzeug 1 zuwendet, befindet er sich in dem wunschgemäßen Abstand gegenüber der ersten Palette 7 als Absetzposition. Durch einen nicht dargestellten Schalter kann zwischen einem Abstand d für die erste Palette 7 oder einem angepassten Abstand für die zweite Palette 8 gewählt werden.

## Patentansprüche

1. Verfahren zur Steuerung eines Flurförderzeugs (1) beim Kommissionieren bei einem Flurförderzeug (1) mit mindestens einem Umgebungssensor zur Erfassung der relativen Position eines Bedieners (9) in der Umgebung des Flurförderzeugs (1),
**dadurch gekennzeichnet,**
**dass** von einer Steuerung das Flurförderzeug (1) mit einer Veränderung der Position des Bedieners (9) mitbewegt wird, wobei bei einem Anhalten des Bedieners (9) das Flurförderzeug in einem frei wählbaren, zuvor in Fahrzeuglängsrichtung festgelegten Abstand (d) zwischen einem Bezugspunkt einer Lastaufnahmevorrichtung des Flurförderzeugs (1) und der Position des Bedieners (9) gestoppt wird.

2. Verfahren nach Anspruch 1,
**dadurch gekennzeichnet,**
**dass** die Steuerung das Flurförderzeug (1) in einem frei wählbaren, zuvor in Fahrzeugquerrichtung festgelegten Abstand zwischen einem Bezugspunkt einer Lastaufnahmevorrichtung des Flurförderzeugs (1) und der Position des Bedieners (9) stoppt.

3. Verfahren nach Anspruch 1 oder 2,
**dadurch gekennzeichnet,**
**dass** der Abstand (d) in Fahrzeuglängsrichtung und/oder der Abstand in Fahrzeugquerrichtung von dem Bediener (9) durch einen Schieberegler eingestellt werden kann.

4. Verfahren nach einem der Ansprüche 1 bis 3,
**dadurch gekennzeichnet,**
**dass** ein Zielkorridor eingegeben werden kann mit einer maximalen Abweichung von der Stoppposition, bei der, nachdem das Flurförderzeug (1) den Zielkorridor erreicht hat, keine Nachregelung durchgeführt wird.

5. Verfahren nach einem der Ansprüche 1 bis 4,
**dadurch gekennzeichnet,**
**dass** das Flurförderzeug (1) zwei oder mehr Paletten (7,8) auf einer Lastaufnahmevorrichtung in Längsrichtung hintereinander transportieren kann und Abstände für die einzelnen Paletten (7,8) ausgewählt werden können, insbesondere durch einen Tastschalter ausgewählt werden können.

6. Verfahren nach einem der Ansprüche 1 bis 5,
**dadurch gekennzeichnet,**
**dass** das Flurförderzeug (1) ein Zugfahrzeug für einen Routenzug ist und Abstände für die einzelnen Routenzuganhänger ausgewählt werden können.

7. Verfahren nach einem der Ansprüche 1 bis 6,
**dadurch gekennzeichnet,**
**dass** das Flurförderzeug (1) einen Fahrerstand aufweist und das Verfahren eingeschaltet wird, sobald eine Steuerung das Verlassen des Fahrerstandes durch Fahrererkennungssensoren erfasst.

## Claims

1. Method for controlling an industrial truck (1) when picking in the case of an industrial truck (1) with at least one surroundings sensor for detecting the relative position of an operator (9) in the surroundings of the industrial truck (1),
**characterized**
**in that** when the position of the operator (9) changes the industrial truck (1) is moved along by a controller, wherein when the operator (9) stops the industrial truck is stopped at a freely selectable distance (d), defined in advance in the longitudinal direction of the vehicle, between a reference point of the load pick-up device of the industrial truck (1) and the position of the operator (9).

2. Method according to Claim 1,
**characterized**
**in that** the controller stops the industrial truck (1) at a freely selectable distance, defined in advance in the transverse direction of the vehicle, between a reference point of a load pick-up device of the industrial truck (1) and the position of the operator (9).

3. Method according to Claim 1 or 2,
**characterized**
**in that** the distance (d) can be set in the longitudinal direction of the vehicle and/or the distance can be set in the transverse direction of the vehicle by the operator (9) by means of a sliding controller.

4. Method according to one of Claims 1 to 3,
**characterized**
**in that** a target corridor can be input with a maximum deviation from the stopping position in which no subsequent adjustment is carried out after the industrial truck (1) has reached the target corridor.

5. Method according to one of Claims 1 to 4,
**characterized**
**in that** the industrial truck (1) can transport two or more pallets (7, 8) one behind the other in the longitudinal direction on a load pick-up device, and distances can be selected for the individual pallets (7, 8), in particular can be selected by means of a pushbutton switch.

6. Method according to one of Claims 1 to 5,
**characterized**
**in that** the industrial truck (1) is a traction vehicle for a tugger train, and distances can be selected for the individual tugger train trailers.

7. Method according to one of Claims 1 to 6,
**characterized**
**in that** the industrial truck (1) has a driver stand and the method is switched on as soon as a controller detects that the driver stand is exited, by means of driver detection sensors.

## Revendications

1. Procédé pour commander un chariot de manutention (1) pour la préparation de commandes sur un chariot de manutention (1) comportant au moins un capteur d'environnement destiné à détecter la position relative d'un opérateur (9) dans l'environnement du chariot de manutention (1),
**caractérisé en ce que** le chariot de manutention (1) est déplacé par une unité de commande en association avec une modification de la position de l'opérateur (9), dans lequel, lorsque l'opérateur (9) s'immobilise, le chariot de manutention est arrêté à une distance (d) pouvant être choisie librement et préalablement fixée dans la direction longitudinale du véhicule, entre un point de référence d'un dispositif de prise de charge du chariot de manutention (1) et la position de l'opérateur (9).

2. Procédé selon la revendication 1,
**caractérisé en ce que** l'unité de commande arrête le chariot de manutention (1) à une distance pouvant être choisie librement et préalablement fixée dans la direction transversale du véhicule, entre un point de référence d'un dispositif de prise de charge du chariot de manutention (1) et la position de l'opérateur (9).

3. Procédé selon la revendication 1 ou 2,
**caractérisé en ce que** la distance (d) dans la direction longitudinale du véhicule et/ou la distance dans une direction transversale au véhicule peut être réglée par l'opérateur (9) au moyen d'un curseur.

4. Procédé selon l'une des revendications 1 à 3,
**caractérisé en ce qu'**un couloir cible présentant un écart maximal à la position d'arrêt peut être fourni en entrée, pour lequel aucun réajustement n'est effectué après que le chariot de manutention (1) a atteint le couloir cible.

5. Procédé selon l'une des revendications 1 à 4,
**caractérisé en ce que** le chariot de manutention (1) peut transporter deux palettes (7, 8) ou plus situées l'une derrière l'autre dans la direction longitudinale sur un dispositif de prise de charge et **en ce que** des distances peuvent être choisies pour les palettes (7, 8) individuelles, et peuvent en particulier être choisies par l'intermédiaire d'un bouton poussoir.

6. Procédé selon l'une des revendications 1 à 5,
**caractérisé en ce que** le chariot de manutention (1) est un véhicule tracteur destiné à un chariot tracteur et **en ce que** des distances peuvent être choisies individuellement pour les remorques individuelles.

7. Procédé selon l'une des revendications 1 à 6,
**caractérisé en ce que** le chariot de manutention (1) comporte un poste de conduite et **en ce que** le procédé est mis en oeuvre dès qu'une unité de commande a détecté au moyen de capteurs de détection de conducteur que le conducteur a quitté le poste de conduite.
